Europäisches Patentamt

**European Patent Office**

**Office européen des brevets**

(11) Numéro de publication: **0 373 277 B1**

# FASCICULE DE BREVET EUROPEEN

(45) Date de publication de fascicule du brevet: **25.08.93** (51) Int. Cl.5: **H04L 5/02**, H04L 27/34

(21) Numéro de dépôt: **88480096.2**

(22) Date de dépôt: **13.12.88**

(54) **Modem multifréquence utilisant la modulation codée par treillis.**

(43) Date de publication de la demande:
**20.06.90 Bulletin 90/25**

(45) Mention de la délivrance du brevet:
**25.08.93 Bulletin 93/34**

(84) Etats contractants désignés:
**DE FR GB**

(56) Documents cités:
**WO-A-88/00417**
**US-A- 4 679 227**

**TELECOMMUNICATIONS, vol. 19, no. 10, octobre 1985, pages 58j-58r, Dedham, Massachusetts, US; H.R. JOHNSON: "PC communications: The revolution is coming"**

**GLOBAL TELECOMMUNICATIONS CONFERENCE (GLOBECOM) 1987, Tokyo, 15 - 18 novembre 1987, pages 52.1.1-52.1.4, IEEE, New York, US; R. STASINSKI: "Efficient realization of digital frequency division multiplexing modems"**

**GLOBAL TELECOMMUNICATIONS CONFERENCE (GLOBECOM) 1987, Tokyo, 15 - 18 novembre 1987, pages 12.7.1-12.7.7, IEEE, New York, US; N. KOBAYASHI et al.:**

**"Simplified Viterbi decoding for high-speed data modem"**

**INTERNATIONAL CONFERENCE ON COMMUNICATIONS (ICC) 1988, Philadelphia, PA, 12 - 15 juin 1988, vol. 1, pages 15.1.1-15.1.5, IEEE, New York, US; A. CHOULY et al.: "Application of trellis coding to digital microwave radio"**

(73) Titulaire: **International Business Machines Corporation**
**Old Orchard Road**
**Armonk, N.Y. 10504(US)**

(72) Inventeur: **Liethoudt, Thierry**
**Le Vercors IV 3 Avenue Saint Maurice**
**F-06100 Nice(FR)**
Inventeur: **Milewski, Andrzej**
**569 Chemin des Salettes**
**F-06570 Saint Paul(FR)**

(74) Mandataire: **Bonneau, Gérard et al**
**Compagnie IBM France Département de Propriété Intellectuelle**
**F-06610 La Gaude (FR)**

**Description**

La présente invention concerne les modems multifréquence et plus particulièrement un modem multifréquence utilisant la modulation codée par treillis.

Les signaux transmis sur une ligne téléphonique étant de nature analogique, l'acheminement de données numériques nécessite l'usage d'un modulateur/démodulateur ou modem. Grâce à l'essor considérable des techniques d'intégration dans le domaine électronique, les modems actuels comportent des microprocesseurs qui mettent en oeuvre des algorithmes de traitement du signal très évolués permettant d'atteindre des débits de 19200 bits/s.

De tels débits ne peuvent cependant être obtenus avec une fiabilité suffisante qu'à l'aide de techniques sophistiquées de protection contre les erreurs. Ainsi, afin de lutter contre les perturbations qui dégradent le signal, on introduit une certaine redondance dans l'information transmise pour permettre à la réception, la détection, voire la correction des éventuelles erreurs de transmission. La plus efficace de ces techniques est la modulation codée par treillis (TCM).

En marge des techniques classiques, certains modems profitent de la puissance de calcul des microprocesseurs de traitement du signal les plus récents pour mettre en oeuvre la transmission de données en parallèle. Dans un tel système, décrit dans le brevet US-A-4,679,227, la bande de fréquence utile de la ligne qui se trouve comprise entre 0 et 3600 Hz, est divisée en plusieurs bandes indépendantes appelées sous-canaux. Les données binaires à transmettre sont réparties puis transmises à travers ces sous-canaux à des débits qui sont fonction des caractéristiques de la ligne à la fréquence correspondant au sous-canal considéré. Il est ainsi possible d'atteindre un débit de transmission proche du maximum possible tout en luttant efficacement contre certaines distorsions couramment rencontrées sur les lignes téléphoniques.

Afin d'améliorer les performances d'un tel modem utilisant la transmission de données en multifréquence, et en particulier sa protection contre les erreurs de transmission, l'idée qui a été envisagée ici est de lui appliquer la technique de modulation codée par treillis. La technique TCM permet en effet d'obtenir les mêmes performances qu'un modem classique avec un rapport signal sur bruit inférieur de 3 à 6 dB. Malheureusement, l'application directe du TCM au codage en multifréquence entraîne un volume de calcul incompatible avec un fonctionnement en temps réel.

Par conséquent, l'objet de la présente invention est un modem du type multifréquence utilisant des algorithmes TCM qui introduisent une parallèlisation importante des opérations lors de l'encodage et du décodage. Lors de l'encodage, la méthode utilise un treillis unique pour coder simultanément plusieurs constellations de tailles différentes. Au décodage, une pondération de la métrique permet de corriger, avant l'algorithme de Viterbi, les modifications de distances introduites lors des changements de constellation. Il est ainsi possible de conserver une complexité comparable à celle nécessaire à un codage TCM classique, et donc de respecter les contraintes de temps permettant un fonctionnement en temps réel.

Cet objet est réalisé par un modem multifréquence utilisant la modulation codée par treillis dans lequel la suite de bits en série en provenance du DTE, ou à transmettre vers le DTE, est divisée en groupes de bits dont le nombre m pour chaque groupe est déterminé par les caractéristiques d'un sous-canal k de la bande passante de la ligne téléphonique, associé au groupe de m bits. La partie transmission du modem comprend un moyen d'encodage fournissant $m + 1$ bits en réponse aux m bits de chacun des groupes de bits, un moyen de conversion fournissant un symbole complexe X(k) pris parmi une constellation de $2^{m+1}$ symboles en réponse aux $m + 1$ bits associés à chaque sous-canal k, un premier moyen de transformation fournissant une séquence dans le temps d'échantillons numériques obtenue en effectuant la transformée de Fourier discrète inverse de la séquence des symboles complexes X(k), et un convertisseur numérique-analogique pour convertir les échantillons numériques en signaux analogiques à transmettre sur la ligne téléphonique. La partie réception comprend un convertisseur analogique-numérique fournissant une séquence dans le temps d'échantillons numériques à partir des signaux analogiques en provenance de la ligne téléphonique, un deuxième moyen de transformation fournissant une séquence dans le domaine des fréquences de symboles complexes Y(k) obtenue en effectuant la transformée de Fourier discrète de la séquence d'échantillons numériques, et un moyen de décodage Viterbi fournissant un groupe de m bits en réponse à chaque symbole Y(k).

Cet objet ainsi que d'autres seront mieux compris à la lecture de la description qui suit, faite en référence aux dessins dans lesquels :

la Figure 1 est un bloc-diagramme d'un modem conforme à l'invention,

la Figure 2 est un schéma représentant le moyen d'encodage de la partie transmission du modem selon l'invention,

la Figure 3 est un schéma du codeur convolutionnel faisant partie du moyen d'encodage de la Figure 2,

EP 0 373 277 B1

la Figure 4 est un graphique représentant le treillis associé au codeur convolutionnel de la Figure 3,

la Figure 5 est un schéma graphique montrant la façon de disposer les subsets pour les constellations ayant m pair,

la Figure 6 est un schéma graphique montrant la façon de disposer les subsets pour les constellations ayant m impair,

la Figure 7 représente deux chemins voisins et les combinaisons de bits associées obtenues à l'aide du codeur convolutionnel de la Figure 3,

la Figure 8 est un graphique représentant le treillis et les subsets associés à ses différentes branches,

la Figure 9 est un schéma du bloc d'encodage de la partie transmission du modem, montrant la disposition des bits à la sortie du codeur convolutionnel,

la Figure 10 est un graphique donnant un exemple de chemins voisins pouvant être obtenus lors du décodage par l'algorithme de Viterbi,

la Figure 11 est le même graphique que celui de la Figure 10, montrant la technique du survivant utilisée par l'algorithme de Viterbi,

la Figure 12 est une représentation graphique montrant la superposition des points d'une constellation réduite à 16 points, aux points d'une constellation à 64 points,

la Figure 13 est une représentation graphique montrant la superposition des points d'une constellation réduite à 8 points, aux points d'une constellation à 32 points,

la Figure 14 est un graphique montrant deux chemins voisins dont les branches sont associées à des constellations différentes, lors du décodage par l'algorithme de Viterbi,

la Figure 15 est un schéma d'un autre codeur convolutionnel que celui de la Figure 3, pouvant être également utilisé dans l'invention.

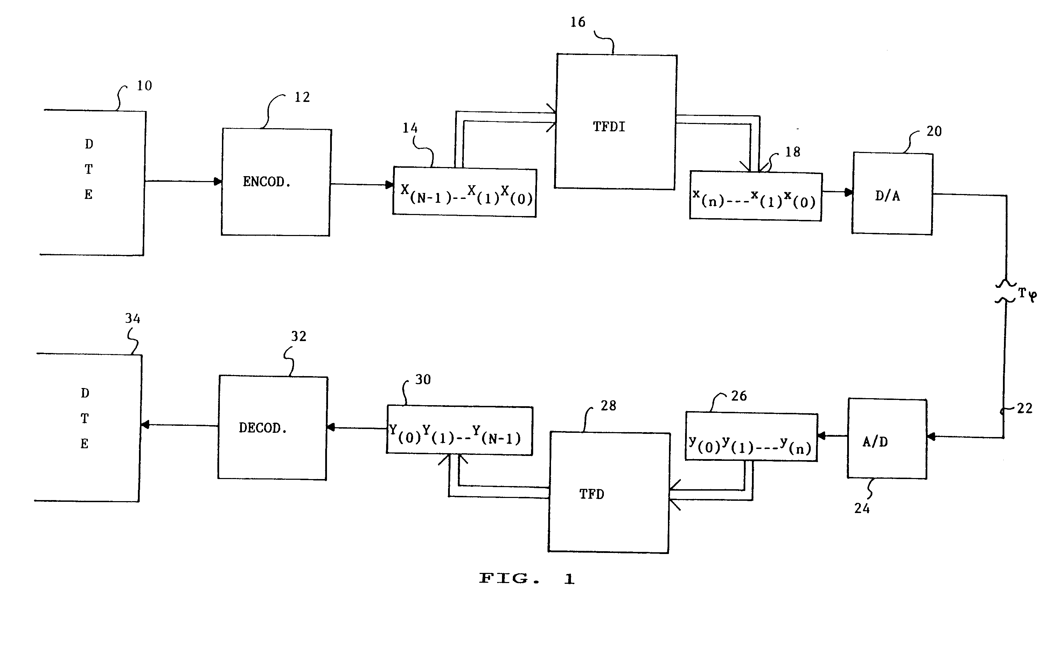

Un modem mettant en oeuvre l'invention est représenté schématiquement sur la Figure 1. Les données numériques en provenance du DTE 10 sont tout d'abord encodées par l'encodeur 12 de façon à fournir une suite de nombres complexes X(0),...,X(k), associés aux sous-canaux 0,1,...,N-1, composant la bande de fréquence, ces nombres complexes étant chargés en série dans le sérialisateur/désérialisateur 14. A l'aide de la transformée de Fourier discrète inverse (TFDI) la suite des nombres complexes X(0),...,X(N-1), est transformée, dans le bloc 16, en une suite d'échantillons de la séquence temporelle x(0),...,x(n), qui sont chargés dans le sérialisateur/désérialisateur 18 de façon à être fournis en série au convertisseur digital-analogique 20. Les signaux analogiques résultants sont enfin transmis sur la ligne téléphonique 22.

A la réception les signaux analogiques en provenance de la ligne téléphonique 22 sont tout d'abord transformés en échantillons numériques y(0),...,y(n), dans le convertisseur analogique-digital 24, qui sont chargés dans le sérialiseur/désérialiseur 26. Le sérialiseur/désérialiseur 26 a pour but de fournir la suite numérique x(0),...,x(n), au bloc 28 qui en prend la transformée de Fourier discrète (TFD). Le bloc de nombres complexes résultant est restitué en série par le sérialiseur/désérialiseur 30 au décodeur 32 de façon à fournir une suite de données binaires au DTE 34.

L'explication générale des principales fonctions du modem multifréquence de la Figure 1 est donnée ci-dessous.

Encodage des données binaires

Le rôle du bloc d'encodage 12 est d'effectuer la transformation des données binaires en signaux aptes à être traités par la transformée de Fourier discrète inverse. Cette chaîne de bits est divisée en k groupes de bits juxtaposés correspondant aux k sous-canaux divisant la bande de fréquence de la ligne. En supposant une bande de fréquence nominale de fonctionnement de 0 à 3600 Hz, un nombre de 512 sous-canaux peut être utilisé, ce qui correspond à une largeur approximative de 7 Hz par sous-canal. En fait, on pourrait utiliser un nombre de sous-canaux plus élevé afin d'obtenir un débit le plus élevé possible. Mais le fonctionnement par bloc ou séquence inhérent à ce type de modem, impose de stocker les données en cours de traitement, ce qui en pratique, limite rapidement le nombre de sous-canaux que l'on peut utiliser. Un accroissement trop important de la longueur de la séquence entraîne un retard qui, lors de l'échange d'informations, peut entraver le bon fonctionnement de l'ensemble.

Le nombre de bits que l'on peut transmettre sans erreur dans un sous-canal, dépend de la fonction de transfert du sous-canal. Sur une ligne téléphonique classique, les fréquences les plus hautes et les plus basses du spectre ne sont pas correctement transmises. On n'alloue donc pas de bits aux deux extrémités de la bande. C'est ainsi que les 25 à 30 premiers et derniers sous-canaux de la bande ne sont pas utilisés. Par contre, dans les sous-canaux comportant un bon rapport signal/bruit, un nombre de bits pouvant aller jusqu'à 9 peut être transmis. Le nombre de bits par sous-canal pourra donc être compris entre 2 et 9.

3

L'encodeur 12 transforme la chaîne de bits en provenance du DTE en nombres complexes X(0),...,X(N-1), par l'intermédiaire de constellations de dimension deux. En fonction du nombre de bits m qui sont alloués au sous-canal k, la constellation est différente. Comme on le verra par la suite, l'encodage étant du type TCM, un sous-canal pouvant transmettre m bits correspond à une constellation de $2^{m+1}$ symboles. Les constellations sont définies une fois pour toutes et connues de l'émetteur et du récepteur du modem. On doit noter que, étant donné que toutes les constellations ont une puissance moyenne égale, seule la distance inter-symbole est modifiée d'une constellation à une autre. La technique de codage par points d'une constellation est décrite dans l'article de A. Gersho et V. Lawrence "Multidimensional Signal Constellations for Voice-band Data Transmission", publié dans IEEE, Journal of selected area in Communications, Vol. SAC-2, No. 5, 1984.

Transformée de Fourier discrète inverse (TFDI)

La séquence de nombres complexes X(0),X(1),...,X(N-1), en sortie de l'encodeur est transformée par le bloc TFDI en une séquence temporelle par l'expression.

$$x(n) = \frac{1}{N} \sum_{k=0}^{N-1} X(k) \ e^{\frac{j2\pi nk}{N}}$$

Les signaux transmis sur la ligne devant être nécessairement réels, deux solutions sont possibles. Dans la première solution, on déduit des 512 symboles complexes en sortie de l'encodeur, 512 autres symboles par symétrie. Dans ce cas, on récupère en sortie du bloc TFDI, 1024 échantillons réels du signal temporel.

La deuxième solution qui est préférée pour la mise en oeuvre de l'invention consiste à ajouter aux 512 symboles complexes, une suite de 512 zéros. Après application de la transformée de Fourier inverse, on obtient 1024 nombres complexes dont la partie réelle représente les échantillons temporels désirés.

On doit noter que selon le théorème de l'échantillonnage de Nyquist, la fréquence d'échantillonnage doit être au moins égale à 7200 Hz dans le cas d'une bande utilisable de 3600 Hz. Si on utilise une fréquence d'échantillonnage de 7200 Hz, cela signifie que les blocs x(0),...,x(n), sont transmis à la fréquence de 7200/1024 ≅ 7 Hz.

Transformée de Fourier discrète (TFD)

Le signal analogique reçu sur la ligne téléphonique 22 est échantillonné à la même fréquence d'échantillonnage qu'à l'émission à l'aide du convertisseur analogique-digital de façon à fournir une séquence de 1024 échantillons numériques y(0),...,y(n).

L'application de la transformée de Fourier discrète dans le bloc 28, à la séquence y(0),y(1),...,y(n), permet d'obtenir une séquence de nombres complexes Y(0),Y(1),...,Y(N-1) de valeur :

$$Y(k) = \sum_{n=0}^{N-1} y(n) \ e^{\frac{-j2\pi nk}{N}}$$

Les échantillons y(0),...,y(n) correspondent à l'échantillonnage d'un signal x(0),...,x(n) ayant subi l'influence du bruit additif dû à la ligne.

y(k) = x(k) + w(k)

avec w(k) représentant l'échantillon de bruit donc :

Y(k) = X(k) + W(k)

La séquence des nombres complexes Y(0),...,Y(N-1) se ramène donc à la même somme de 2 termes, l'un

4

provenant du bruit blanc gaussien.

Décodage en données binaires

Le rôle du bloc de décodage 32 est, à l'inverse de l'encodage, de restituer à partir de la séquence des nombres complexes Y(0),Y(1),...,Y(n-1), la séquence binaire émise. Pour cela, le modem dispose pour chaque constellation, de la même table de correspondance que celle employée par le dispositif d'encodage. Cette procédure ne pouvant s'appliquer qu'aux symboles complexes contenus dans cette table, elle doit être précédée par une opération de détection qui consiste à déterminer pour chaque symbole bruité Y(k), le symbole X(k) le plus proche dans la constellation utilisée. Cette opération de detection qui met en oeuvre la technique TCM et fait appel à l'algorithme de Viterbi, est une des caractéristiques importantes de l'invention et sera vue en détail dans la suite de la description.

Les performances d'un modem utilisant la transmission de données en multifréquence, tel que représenté sur la Figure 1, peuvent être nettement améliorées par l'utilisation de la modulation codée par treillis (TCM) telle que le prévoit l'invention. Dans la technique TCM décrite dans l'article de G. Ungerboeck "Channel Coding with Multilevel/phase Signals" publié dans IEEE, Transactions on Information Theory, Vol. IT-28, No. 1, 1982, une redondance est introduite au codage par l'expansion des symboles d'une constellation unique. A l'encodage, un codeur convolutionnel gouverne la sélection des symboles afin de générer le signal codé. Au décodage, la séquence bruitée est décodée à l'aide d'un décodeur à maximum de vraisemblance utilisant un algorithme de Viterbi, pondéré comme l'enseigne la présente invention.

Les caractéristiques essentielles de l'invention qui résident principalement dans une nouvelle technique d'encodage et de décodage TCM sont décrites ci-après.

Encodage TCM

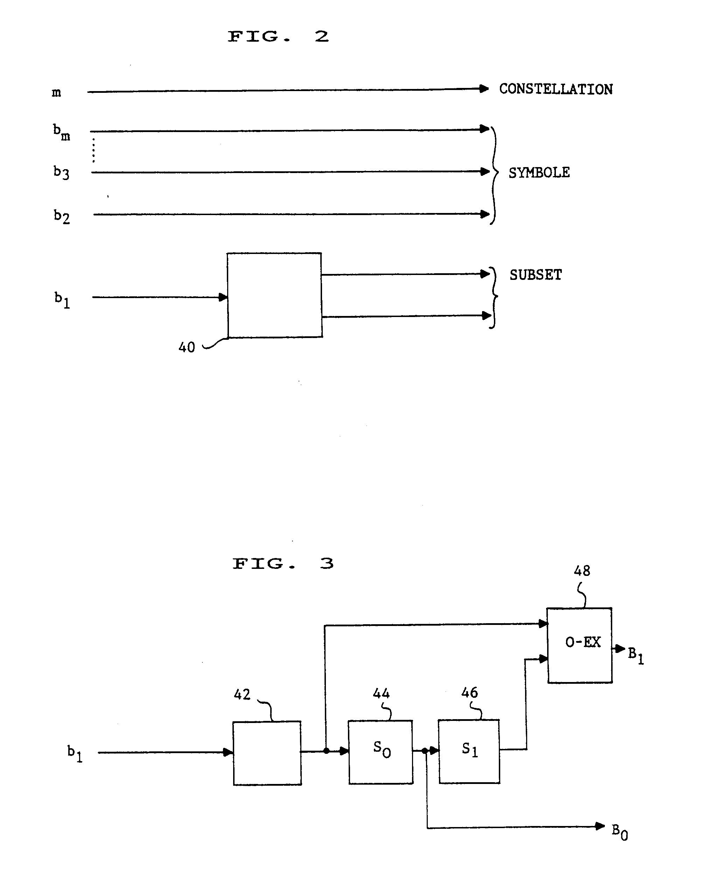

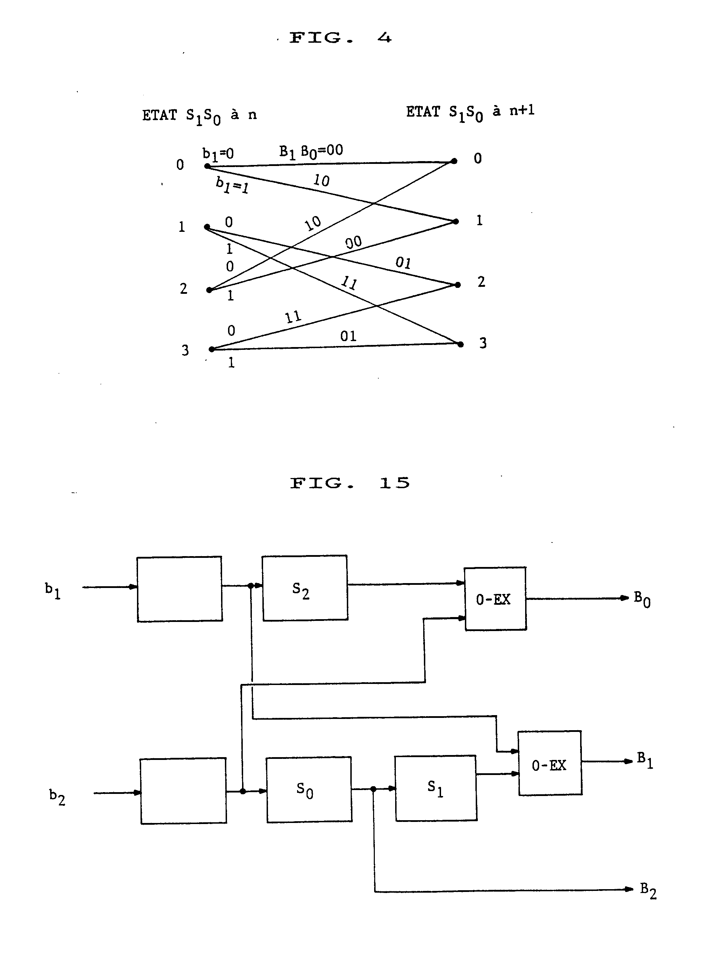

Comme on l'a vu précédemment, le rôle du bloc d'encodage est d'effectuer la transformation des données binaires en symboles dans le plan complexe pouvant être traités par la transformée de Fourier discrète inverse. Avant d'être converties en symboles, les données binaires sont d'abord codées dans un codeur convolutionnel se trouvant dans le bloc d'encodage, tel que représenté sur les Figures 2 et 3.

La Figure 2 illustre les fonctions de codage mises en oeuvre dans le bloc d'encodage. Pour chaque groupe de m bits correspondant à un sous-canal k, le bit $b_1$ est traité par le codeur convolutionnel 40 pour générer 2 bits codés. Ces bits sont utilisés pour générer un des 4 subsets de la constellation codée à $2^{m+1}$ symboles sélectionnée par la ligne m. Les m-1 bits restants b2,...,bm sont utilisés pour déterminer lequel des $2^{m-1}$ symboles à l'intérieur de ce subset doit être transmis.

Un codeur convolutionnel adéquat est montré sur la Figure 3. C'est un codeur comportant deux cellules à retard 44 (S0) et 46 (S1), et la cellule d'entrée 42 du bit $b_1$, le premier bit de sortie étant pris sur la sortie de la cellule 44, et le deuxième bit de sortie étant le OU-exclusif 48 des sorties des cellules 42 et 46. Avec 512 sous-canaux, la vitesse de traitement des groupes de bits est de 3600 Hz, ce qui signifie un retard par cellule à retard égal à 1/3600 s. C'est donc un codeur à 4 états déterminé par les 4 combinaisons possibles des contenus $S_1 S_0$ des cellules 46 et 44, et de taux de codage $R = 1/2$ (le bit $b_1$ étant transformé en 2 Bits $B_1 B_0$).

Le treillis associé à ce codeur convolutionnel est illustré sur la Figure 4. Les 4 états, correspondant à $S_1 S_0$, sont représentés verticalement par la valeur 0,1,2 et 3; et les 4 subsets correspondent aux chemins empruntés pour passer d'un état à un autre, représentés par la valeur du couple $B_1 B_0$. Ainsi, lorsqu'on se trouve dans l'état 0 (représenté par le couple $S_1 S_0 = 00$), l'entrée du bit $b_1 = 1$ sélectionne le subset représenté par $B_1 B_0 = 10$ et fait passer le codeur de l'état 0 à l'état 1.

Le problème qui se pose est alors d'affecter les 4 subsets aux 4 couples possibles $B_1 B_0$, c'est à dire aux branches du treillis représenté sur la Figure 4. Cette affectation, classique dans la technique TCM est basée sur la maximisation de la distance, encore appelée "métrique", séparant deux chemins (ou séquences codées) voisins permettant de passer d'un état à un autre le plus rapidement possible. Cette condition est réalisée en effectuant le partitionnement en subsets.

Avant d'expliquer dans le détail ce qu'est le partitionnement des subsets, il est bon de préciser à nouveau que, quel que soit le nombre de bits m affecté à la suite des sous-canaux, un seul codeur convolutionnel est utilisé pour toutes les constellations. Ce codeur fournit deux bits codés et correspond donc à l'existence de 4 subsets, quelle que soit la constellation impliquée. Comme il a été précisé précédemment, le nombre m de bits par sous-canal est compris entre 2 et 9. Il y a donc 8 constellations possible comprenant de 8 à 1024 points comme le montre la table 1 suivante, ces constellations pouvant être de forme carrée lorsque m est impair, ou diagonale lorsque m est pair.

TABLE 1

| Nombre de bits m | Nbre de points de la constellation codée | Type de la constellation codée | Nombre de symboles par subsets |
|---|---|---|---|
| 2 | 8 | diagonale | 2 |
| 3 | 16 | carrée | 4 |
| 4 | 32 | diagonale | 8 |
| 5 | 64 | carrée | 16 |
| 6 | 128 | diagonale | 32 |
| 7 | 256 | carrée | 64 |
| 8 | 512 | diagonale | 128 |
| 9 | 1024 | carrée | 256 |

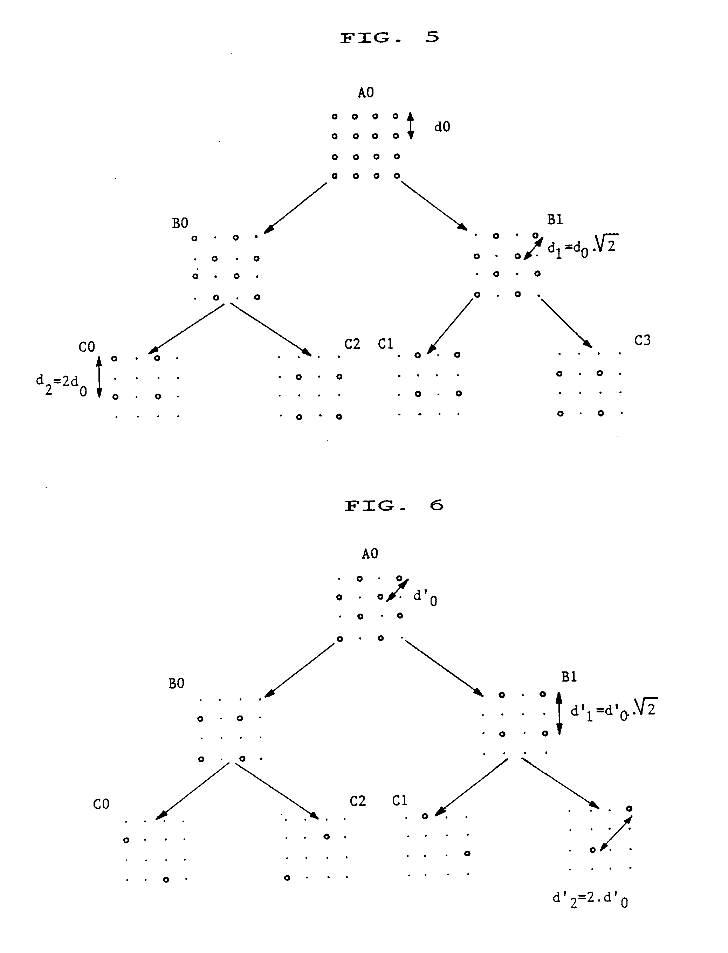

Le partitionnement consiste à choisir les points de la constellation appartenant à un même subset de telle sorte que la distance qui les sépare soit la plus grande possible. Ainsi, pour une constellation carrée de 16 points (m = 3), les subsets $C_0, C_1, C_2$ et $C_3$ sont définis comme le montre la Figure 5. Si $d_0$ est la distance entre 2 points de la constellation, on commence par diviser l'ensemble $A_0$ des points en deux sous-ensembles $B_0, B_1$ de telle sorte que la distance entre 2 points dans chacun des sous-ensembles soit la plus élevée possible, ce qui correspond à une distance $d_1 = d_0.\sqrt{2}$. Puis les deux sous-ensembles $B_0, B_1$ sont de nouveau séparés en quatre sous-ensembles $C_0, C_1, C_2, C_3$ qui sont les 4 subsets recherchés, en recherchant toujours la plus grande distance entre 2 points soit $d_2 = d_1.\sqrt{2} = 2d_0$. Pour les autres constellations carrées, les rapports des distances entre les points des subsets sont les mêmes, mais le nombre de points par subset est fonction de m comme le montre la table ci-dessus.

La Figure 6 montre le positionnement de la constellation diagonale à 8 points (m = 2) en 4 subsets $C_0, C_1, C_2, C_3$. Ce partitionnement est basé sur le même principe que précédemment, excepté que la distance $d'_2$ entre 2 points d'un subset est plus élevée que la distance correspondante pour les constellations carrées ($d'_2 = d_2.\sqrt{2}$).

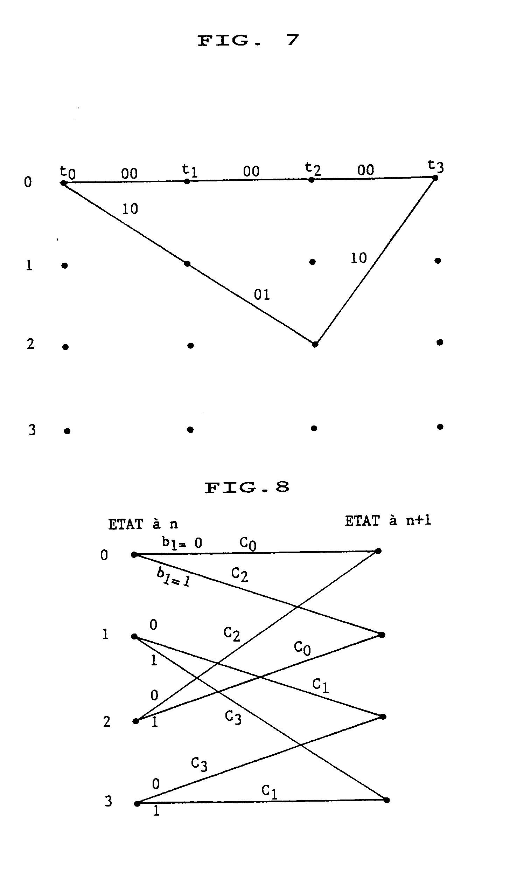

Ce partitionnement permet alors l'affectation des subsets aux branches du treillis représenté sur la Figure 4, grâce à la maximisation des métriques. Bien que n'étant pas une des caractéristiques de l'invention, cette maximisation est essentielle dans la technique TCM. L'exemple montré sur la Figure 7 permet une meilleure compréhension du problème. Sur cette Figure, il est supposé que la séquence codée, ou chemin, partant de l'état 0 au temps $t_0$ du codeur convolutionnel pour aboutir au même état 0 passe par une suite d'états 0 aux temps $t_1, t_2, t_3, ...$ Si, entre le temps $t_0$ et le temps $t_1$, une erreur vient modifier le signal, ce n'est pas un bit 0 qui semble avoir été transmis, mais un bit 1 qui fait prendre la branche 10 vers l'état 1 conforme au treillis de la Figure 4. Ensuite, la façon la plus rapide de revenir vers l'état 0 est d'emprunter la branche 01 de l'état 1 à l'état 2, puis la branche 10 de l'état 2 à l'état 0 au temps $T_3$. Si on affecte le subset $C_0$ à la branche 00 horizontale, il faut donc affecter le subset $C_2$ à la branche 10 de l'état 0 à l'état 1 pour avoir la distance maximale entre les deux, soit $d_1 = d_0.\sqrt{2}$. Dans ce cas, il reste à affecter le subset $C_1$ à la branche 01 et le subset $C_3$ à la branche 11, le treillis répondant à la condition de maximisation de la métrique étant représenté finalement sur la Figure 8.

Afin de simplifier l'opération de décodage, le partitionnement doit systématiquement suivre les mêmes règles pour chacune des constellations. Ainsi, quelle que soit la constellation carrée considérée, le symbole situé dans le coin supérieur gauche devra toujours appartenir au subset $C_0$ comme il a été représenté sur la Figure 5. Cette condition devra également être respectée pour les constellations diagonales, et le symbole situé dans le coin inférieur gauche appartenant au subset $C_2$ de la constellation à 8 points (voir Figure 6), devra aussi appartenir au subset $C_2$ pour les constellations à 32, 128 ou 512 points.

En outre, comme on le verra pour l'opération de décodage, il est utile que les coordonnées de symboles à l'intérieur de chaque constellation soit liées par un facteur de proportionnalité, de manière a ce que l'on puisse amener, par un changement d'échelle, toutes les constellations à s'inscrire exactement dans la constellation à 1024 points de façon à réaliser ces conditions quelle que soit la constellation utilisée pour chaque sous-canal, la génération du symbole de la constellation considérée, à partir de la séquence de bits affectée à ce sous-canal, s'effectue à partir d'une formulation unique indépendante du nombre de points de la constellation, comme il est expliqué ci-après.

6

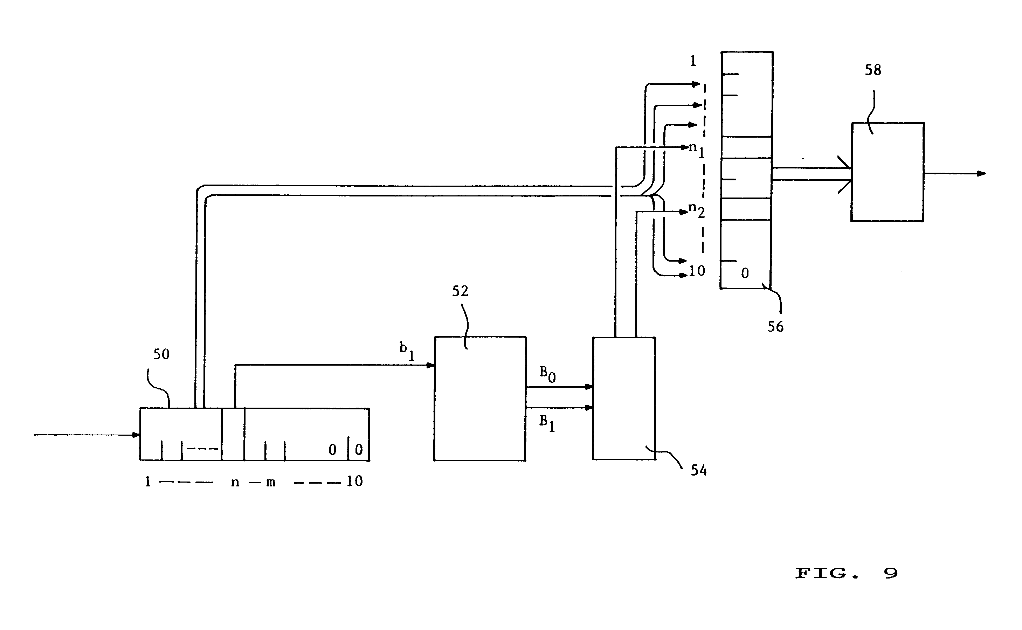

En référence à la Figure 9, les groupes de m bits en provenance du DTE sont chargés dans un registre 50 à 10 positions, le positions supplémentaires correspondent à des 0. Le bit $b_1$ qui doit être transmis au codeur convolutionnel 52, est choisi parmi les m bits significatifs, celui de rang n, avec

$$n = \frac{m+1}{2}$$

si m est impair

$n = \frac{m}{2}$ si m est pair

Le codeur convolutionnel fournit deux bits codés $B_0 B_1$ à partir du bit $b_1$, comme on l'a vu précédemment, à un convertisseur 54 qui les convertit en bits de rang $n_1$ et $n_2$ dans la séquence codée, et dont la valeur est donnée dans les tables ci-dessous en fonction du subset considéré.

La table 2 donne la valeur des bits $n_1$, $n_2$ lorsque m est impair.

TABLE 2

|  | $n_1 = \frac{m+1}{2}$ | $n_2 = m+1$ |
|---|---|---|
| C0 | 0 | 1 |
| C1 | 1 | 1 |
| C2 | 1 | 0 |
| C3 | 0 | 0 |

La table 3 donne les valeurs des bits $n_1$, $n_2$ lorsque m est pair.

TABLE 3

|  | $n_1 = \dfrac{m}{2}$ | $N_2 = m+1$ |
|---|---|---|
| $c_0$ | 0 | 1 |
| $c_1$ | 1 | 0 |
| $c_2$ | 0 | 0 |
| $c_3$ | 1 | 1 |

L'ensemble des m-1 bits non codés et des 2 bits codés $n_1$ et $n_2$ est chargé dans le registre 56 à 10 positions, le nombre maximal de positions du registre correspondant au cas de la constellation à 1024 points lorsque m = 9. Cette séquence codée de m + 1 bits est fournie ensuite au générateur 58 de façon à fournir le symbole correspondant de la constellation à $2^{m+1}$ points.

La façon dont sont générés les symboles de la constellation dans le générateur 58, est expliquée ci-dessous.

La séquence de bits est symbolisée par les valeurs BIT(i), où i est un indice compris entre 1 et 10, ce qui permet de générer jusqu'à 1024 symboles. Les coordonnées d'un symbole sont calculées en considérant indépendamment les deux axes du plan complexe. On définit ainsi deux quantités Re et Im, représentant respectivement les coordonnées du point sur l'axe réel et imaginaire, par :

Re = B(6) + 2.B(5) + 4.B(4) + 8.B(3) + 16.B(2) + 32.B(1)
Im = B(12) + 2.B(11) + 4.B(10) + 8.B(9) + 16.B(8) + 32.B(7)

Le vecteur B(i) à 12 Positions, contient un arrangement obtenu à partir des bits(i).

L'assignation des valeurs B(i) est obtenu de la manière suivante : on calcule un nombre n égal à la partie entière de m/2. Cette valeur n permet de déterminer le nombre de bits à allouer à chaque axe.

B(1) = BIT(1), ......, B(n + 1) = BIT(n + 1)
B(7) = BIT(n + 2), ......, B(n + 7) = BIT(2.n + 2)

On détermine ainsi la position du symbole dans la constellation.

Dans un deuxième temps, en fixant la valeur des bits B(i) restants, on détermine la valeur des échelles, et le type de la constellation. Ainsi, si m + 1 est pair, la constellation est carrée et on ne modifie pas les valeurs déjà transférées. Par contre, si m + 1 est impair, on obtient la constellation diagonale à partir de la constellation carrée d'ordre m + 2 en interdisant aux symboles de prendre certaines valeurs. Pour cela on fixe :

B(n + 7) = BIT[ (m + 2)/2 ]

Cette condition introduit une dépendance des coordonnées de l'axe imaginaire par rapport à l'axe réel.

Enfin, on ajuste en fonction du nombre de points de la constellation les coordonnées des symboles en fixant la valeur des bits suivants :

8

B(n + 2) = 1
et B(n + 8) = 1

Les coordonnées obtenues n'étant pas centrées, afin d'obtenir le symbole complexe Z, on effectue l'opération de recadrage :

$$Z = \frac{Re + j.Im - [\ 32 + j.32\ ]}{2}$$

A l'aide de cette méthode, la génération des symboles s'effectue à partir d'une formulation unique indépendante du nombre de points de la constellation, ce qui simplifie considérablement les calculs.

Si l'on dispose par exemple de 4 bits, la procédure précédente générera un des seize symboles de la constellation à 16 points.

Décodage TCM

Rappelons que le décodage optimal permet la détermination, à partir des symboles non quantifiés ayant subi les perturbations du canal, du chemin le plus probable suivi par la séquence codée à travers le treillis. Ainsi, une séquence reçue $Y = (Y_0, Y_1, ...)$ sera décodée en tenant compte d'un critère de décodage optimal qui sélectionne Xk si on a :

Prob(Y|Xk) > Prob(Y|Xj) pour tout $j \neq k$

Dans notre cas, afin d'augmenter les performances du système, l'encodage a généré lors de la modulation, des symboles codés dans le but de maximiser la distance Euclidienne entre toutes les séquences possibles Xj et Xk pour $j \neq k$.

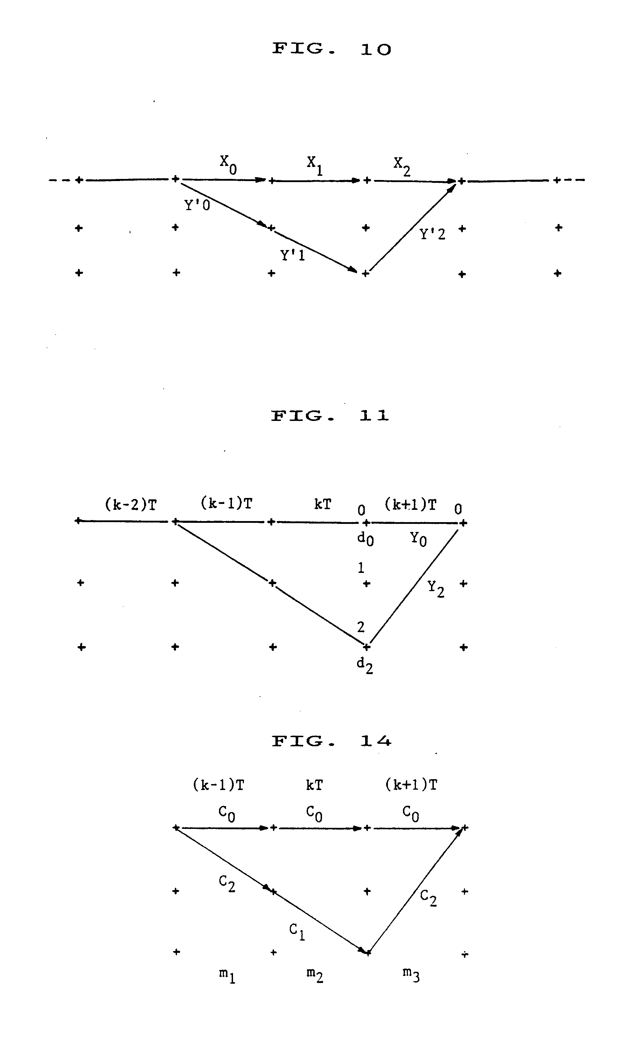

Ainsi conformément à la Figure 10, si une séquence décodée $Y' = (Y'_0, Y'_1, ...)$ diverge de la séquence transmise $X = (X_0, X_1, ...)$ à un instant k, puis converge à nouveau quelques transitions plus tard, le carré de la distance séparant X et Y' sera donné par :

$$D^2(X,Y') = (X_0-Y'_0)^2 + (X_1-Y'_1)^2 + (X_2-Y'_2)^2$$

L'opération de décodage consiste donc à conserver la séquence dont le carré de la distance Euclidienne vérifie :

$$d^2(Y,X_k) < d^2(Y,X_j) \text{ pour tout } j \neq k$$

L'algorithme de Viterbi constitue une méthode de décodage optimale au sens du maximum de vraisemblance, qui répond parfaitement à ce problème.

Rappelons qu'il s'agit d'une procédure récursive qui mémorise pour chaque état, un chemin survivant qui possède une distance totale minimale. Afin d'indiquer les modifications qui résultent du fait que les symboles sont bruités, on considère par exemple, l'extension entre les instants kT et (k + 1)T du survivant correspondant à l'état zéro dans le cas du treillis présenté à la Figure 11.

Etant donné que les deux transitions qui convergent dans l'état zéro proviennent soit de l'état zéro, soit de l'état 2, le survivant à l'instant (k + 1)T reprendra nécessairement un des chemins ayant mené dans l'état 0 ou 2 à l'instant kT. Afin de déterminer le meilleur de ces deux chemins, on dispose de la distance totale $d_0$ associée au survivant de l'état 0 à l'instant kT, de $d_2$ correspondant à l'état 2, et de $Y_0$ et $Y_2$, les symboles sans bruit associés aux transitions du treillis. En désignant par r le symbole reçu, on compare la distance totale des deux chemins en évaluant les quantités :

$$d_0 + (r-Y_0)^2 \text{ et } d_2 + (r-Y_2)^2$$

Si la première valeur est inférieure à la seconde, le survivant de l'état zéro à l'instant (k + 1)T correspondra au survivant de l'état 0 à l'instant kT auquel on aura ajouté la transition associée au symbole $Y_0$. Dans le cas contraire, il reprendra le survivant de l'état 2 à l'instant kT en lui adjoignant la transition associée au

symbole $Y_2$. La distance totale correspondante est mémorisée afin de permettre une nouvelle extension.

Les opérations requises par l'algorithme de décodage supposent donc :

- L'évaluation, pour chaque branche de la métrique $(r-Y_i)^2$, où r représente le symbole reçu, et Yi le symbole sans bruit associé à la transistion du treillis.
- L'addition de ces quantités à la distance totale de chaque survivant afin de déterminer la métrique du chemin.
- La comparaison des différentes métriques étendues afin d'obtenir le nouveau survivant de chaque état.

Cependant, ce qui précède ne tient pas compte des transitions parallèles pouvant intervenir dans le treillis (il y en a 256 pour une constellation à 1024 points). Il faut donc procéder à une réduction de la complexité de l'algorithme. Les règles appliquées lors du partitionnement effectué pour la formation des constellations, ont pour résultat que les quatre plus proches voisins d'un point à déterminer sur la constellation appartiennent aux 4 subsets.

D'autre part, deux symboles du subset 0,1,2 ou 3 ne peuvent pas être simultanément parmi les quatre plus proches voisins. Cette propriété se vérifie quelle que soit la constellation.

De ce fait, les métriques des branches associées aux quatre plus proches voisins représentent les quatre valeurs uniques qui interviennent de manière significative dans l'algorithme de décodage. En effet, seules les branches possédant la plus petite métrique contribueront à la détermination des survivants. Les branches correspondant aux transitions parallèles restantes, dont la métrique est supérieure, pourront être éliminées.

Cette observation suggère donc que quel que soit le sombre de transitions parallèles du treillis, l'évaluation de la métrique correspondant aux quatre plus proches voisins est suffisante pour permettre le décodage à l'aide de l'algorithme de Viterbi. Il en résulte une réduction significative de la complexité. Par exemple dans le cas de l'utilisation de la constellation codée à 1024 points, seul le calcul de quatre métriques sera nécessaire au lieu de 1024. D'autre part la complexité ne dépend plus de la constellation traitée, mais uniquement du nombre de subsets autorisé par le codeur convolutionnel.

Avant l'application de l'algorithme de Viterbi, une étape intermédiaire est donc nécessaire afin de déterminer les quatre plus proches voisins du symbole reçu, et le numéro de subset correspondant. Ici encore, la forme de constellations utilisées permet une simplification importante des opérations, ce qui contribue à la simplification du décodage dans son ensemble.

En effet, les constellations codées ayant toutes été construites sur un modèle semblable, la procédure de décodage pourra être généralisée simplement. Ceci résulte du fait que les coordonnées des symboles à l'intérieur de chaque constellation sont liées par un facteur de proportionnalité lorsque l'on passe d'une constellation carrée à une autre constellation carrée, ou d'une constellation diagonale à une autre constellation diagonale.

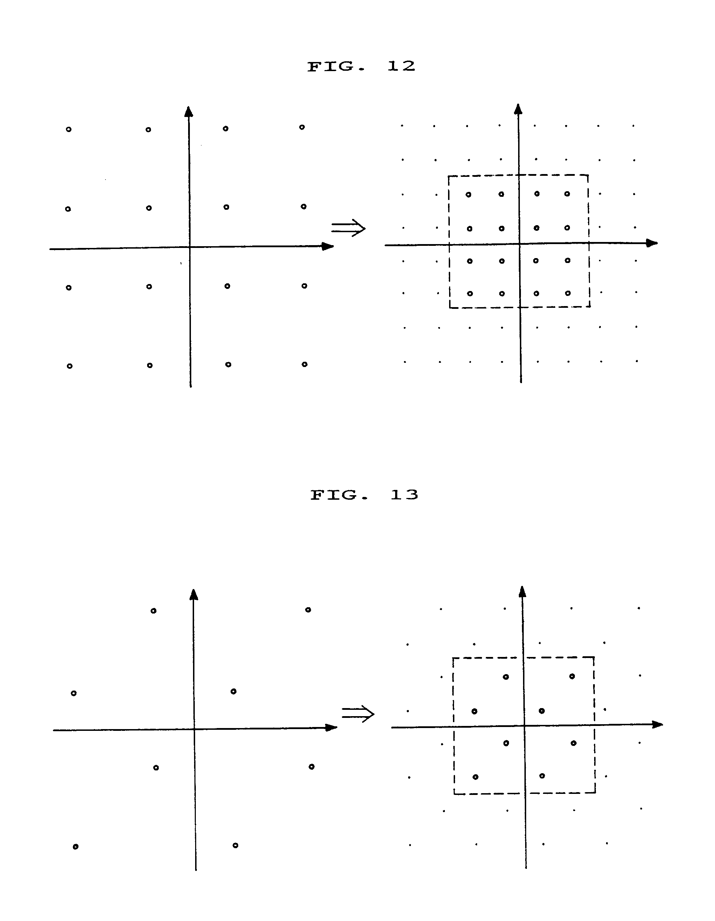

Il est donc possible de ramener les constellations à 16, 64 et 256 points à l'échelle de la constellation à 1024 points. Cette opération nécessite simplement la détermination de la puissance de deux qui convient. La constellation à 16 points dont on modifie l'échelle s'inscrit ainsi dans celle à 64 points conformément à la Figure 12 (les points se superposent). De même, par un changement d'échelle, celle à 64 points s'inscrit dans celle à 256 points, et cette dernière s'inscrit dans celle à 1024 points.

Le facteur d'échelle pour les constellations carrées est, en fonction de m :

| m | 3 | 5 | 7 | 9 |
|---|---|---|---|---|
| Facteur d'échelle | 8 | 4 | 2 | 1 |

De la même façon, par un changement d'échelle, la constellation à 8 points s'inscrit dans la constellation à 32 points comme montré sur la Figure 13, celle à 32 points s'inscrit dans celle à 128 points, et celle à 128 points s'inscrit dans celle à 512 points.

Le facteur d'échelle pour les constellations diagonales est, en fonction de m :

| m | 2 | 4 | 6 | 8 |
|---|---|---|---|---|
| Facteur d'échelle | 8 | 4 | 2 | 1 |

En appliquant le changement d'échelle à toutes les constellations, on est donc ramené à déterminer les plus proches voisins du symboles reçu, soit dans la constellation à 1024 points, soit dans celle à 512 points.

La détermination des 4 plus proches voisins du symbole reçu est classique et s'effectue par comparaison des coordonnées x et y du symbole aux coordonnées immédiatement inférieures et supérieures correspondant aux points de la constellation considérée. La seule difficultée rencontrée provient du cas où le symbole reçu est représenté par un point se situant à l'extérieur de la constellation. Dans ce cas, il faut ramener le point à l'intérieur de la constellation par une translation qui est soit parallèle à l'axe des x, soit parallèle à l'axe des y, ou par une double translation lorsque le point est situé dans un coin de la constellation. La détermination des quatre plus proches voisins se fait ensuite de la même façon que précédemment.

Les quatre plus proches voisins étant déterminés, il est à présent possible d'évaluer la métrique associée à chaque branche du treillis afin de permettre l'extension des survivants. Comme on l'a vu précédemment, ceci nécessite le calcul pour plusieurs chemins menant dans un état. Mais comme plusieurs constellations sont utilisées dans chacun des chemins possibles, les caractéristiques de chaque constellation influencent l'évaluation de la métrique associée au chemin.

En effet, en reprenant l'exemple illustré sur la Figure 14, calculons la distance séparant deux chemins qui divergent à l'instant $(k-1)T$, puis convergent à nouveau à l'instant $(k+1)T$. La procédure de décodage de subset ayant déterminé à chaque instant les plus proches voisins, seuls ces derniers ont été représentés sur le treillis.

En reprenant les subsets associés au codeur convolutionnel tels que représentés sur la Figure 8, on voit que le premier chemin correspond aux subsets $C_0, C_0, C_0$ et le deuxième chemin correspond aux subsets $C_2, C_1, C_2$. La distance minimale ou métrique séparant les 2 chemins est donc égale à :

$$d^2 = (C_2 - C_0)^2 + (C_1 - C_0)^2 + (C_2 - C_0)^2$$

Mais compte tenu du fait que les constellations peuvent être différentes à chaque temps T, les distances minimales entre subsets sont différentes. Ainsi, en se reportant aux Figures 5 et 6, on peut établir les valeurs minimales de $C_2 - C_0$ et $C_1 - C_0$ en fonction de $d_0$ selon que $m=2$ ou $m=3$.

| | $C_1 - C_0$ | $C_2 - C_0$ |
|---|---|---|
| $m=2$ | $\sqrt{2} \cdot D_0 \cdot$ | $2 \, d_0$ |
| $m=3$ | $d_0$ | $\sqrt{2} \cdot d_0$ |

D'où le tableau 4 suivant qui donne la valeur de la métrique pour quatre chemins comportant des valeurs de m différentes aux instants $(k-1)T$, $kT$ et $(k+1)T$.

11

TABLE 4

| (k-1)T | kT | (k + 1)T | Métrique |
|--------|------|----------|----------|
| m = 2 | m = 2 | m = 2 | $10d_0^2$ |
| m = 2 | m = 3 | m = 2 | $9d_0^2$ |
| m = 3 | m = 2 | m = 3 | $6d_0^2$ |
| m = 3 | m = 3 | m = 3 | $5d_0^2$ |

On voit donc que la valeur de la métrique est d'autant plus faible qu'il y a peu de constellations à m = 3 utilisées. Cette valeur est moitié moins élevée pour une séquence avec trois constellations à m = 3($5d_0^2$) que pour une séquence avec trois constellations à m = 2($10d_0^2$). Il est facile pour l'homme du métier de vérifier que la valeur de la métrique diminue encore si la séquence utilisée comporte des constellations avec une valeur de m assez élevée, la métrique ayant la plus faible valeur étant celle qui ne comporte que des constellations à m = 9.

Ainsi, en fonction de la constellation utilisée, le poids de la métrique serait différent et réduirait d'autant plus la précision du décodage. C'est pourquoi une des caractéristiques essentielles de l'invention qui permet une maximisation optimale de la métrique séparant deux chemins consiste à pondérer la métrique en fonction de la constellation traitée afin de rendre l'évaluation de la distance indépendante du changement de constellation. Cette opération revient à multiplier la métrique par un facteur qui ramène la valeur de toutes les métriques à une valeur identique correspondant à une séquence ne comportant que des constellations à m = 2.

En choisissant la constellation à m = 2 comme référence, le facteur de pondération de la métrique en fonction de m est donné dans la table 5.

TABLE 5

| m | Nombre de points | Facteur de pondération |
|---|------------------|------------------------|
| 2 | 8 | 1 |
| 3 | 16 | 2 |
| 4 | 32 | 4 |
| 5 | 64 | 8 |
| 6 | 128 | 16 |
| 7 | 256 | 32 |
| 8 | 512 | 64 |
| 9 | 1024 | 128 |

Ainsi, dans la séquence montrée sur la Figure 14, un calcul simple montre que, quelle que soit la valeur de m, la valeur de la métrique est toujours égale à $10d_0^2$.

Lorsque la pondération de la métrique tel qu'il vient d'être expliqué, a été effectuée, l'algorithme de Viterbi classique peut être utilisé sans aucune modification.

Bien que l'invention ait été décrite en utilisant un codeur convolutionnel 1/2 à 4 états, il est possible d'utiliser un codeur convolutionnel différent. En effet, dans la modulation codée par treillis, on peut obtenir un gain de codage en augmentant la "distance libre" ou distance minimale entre deux chemins voisins comme on l'a vu dans la description qui précède. Il faut donc choisir un codeur convolutionnel qui permette une augmentation de la distance entre les symboles des différents subsets. Ainsi, un codeur convolutionnel tel que représenté sur la Figure 15 pourrait être utilisé. Ce codeur comporte trois cellules à retard S0,S1,S2, deux cellules d'entrée des bits $b_1$ et $b_2$, et deux circuits OU-exclusif. C'est donc un codeur à 8 états, donnant 3 bits en sortie ($B_0,B_1,B_2$) pour deux bits d'entrée, donc de taux 2/3. Bien que dans son principe, le codage demeure semblable à celui réalisé avec le codeur 1/2, des modifications doivent être apportées au décodage, tant au niveau du décodage des subsets qu'au niveau de l'algorithme de Viterbi. De telles modifications sont à la portée de l'homme du métier avec les enseignements apportés par la présente description. Il faut seulement noter que si l'augmentation du nombre d'états et du nombre de subsets du codeur convolutionnel utilisé amène un gain de codage grâce à l'augmentation de la "distance libre", elle entraîne inévitablement une complexité plus grande du décodage qu'il ne faut pas négliger lorsqu'on analyse les performances de l'ensemble.

**Revendications**

**1.** Modem multifréquence utilisant la modulation codée par treillis dans lequel la suite de bits en série en provenance ou à transmettre vers le terminal DTE, est divisée en groupes de bits dont le nombre m pour chaque groupe est déterminé par les caractéristiques d'un sous-canal k de la bande passante d'une ligne téléphonique associé audit groupe; ledit modem étant caractérisé en ce qu'il comprend :
une partie transmission comprenant un moyen de codage (12) fournissant m + 1 bits en réponse aux m bits de chacun desdits groupes de bits, un moyen de conversion (14) fournissant un symbole complexe de valeur X(k) parmi une constellation de $2^{m+1}$ symboles en réponse auxdits m + 1 bits associés à chaque sous-canal k, et un premier moyen de transformation (16) fournissant une séquence dans le temps d'échantillons numériques obtenue en effectuant la transformée de Fourier discrète inverse de la séquence des symboles complexes X(k) correspondant à tous les sous-canaux, lesdits échantillons numériques étant ensuite convertis en signaux analogiques par un convertisseur numérique-analogique (20) avant d'être transmis sur la ligne téléphonique; et
une partie réception comprenant un convertisseur analogique-numérique (24) fournissant une séquence dans le temps d'échantillons numériques à partir de signaux analogiques en provenance de la ligne téléphonique, un deuxième moyen de transformation (28) fournissant une séquence dans le domaine des fréquences de symboles complexes Y(k) associés à chaque sous-canal k, obtenue en effectuant la transformée de Fourier discrète de la séquence d'échantillons numériques, et un moyen de décodage Viterbi (32) fournissant un groupe de m bits en réponse à chaque symbole Y(k).

**2.** Modem selon la revendication 1 dans lequel ledit moyen de décodage Viterbi utilise l'algorithme de Viterbi pour lequel la métrique utilisée pour un sous-canal k est pondérée en fonction du nombre de bits m associés audit sous-canal, de sorte que la distance totale minimale entre deux chemins voisins, a une valeur indépendante des constellations associées aux symboles constituant lesdits chemins.

**3.** Modem selon la revendication 2 dans lequel la métrique utilisée pour un sous-canal k associé à un nombre de bits m est multipliée par un coefficient égal à $2^{m-2}$ de sorte que la distance totale minimale entre deux chemins voisins est égale à la valeur de la distance minimale entre deux chemins n'utilisant que des constellations correspondant à la plus petite valeur de m(m = 2).

**4.** Modem selon l'une des revendications 1 à 3 dans lequel les différentes constellations associées aux différentes valeur de m sont choisies selon un modèle géométrique unique de façon à ce que l'application aux constellations d'un facteur de réduction dépendant de m permette aux points de toute constellation réduite de se superposer aux points de la constellation à 1024 points si m est pair, ou de se superposer aux points de la constellation à 512 points si m est impair, ce qui a pour résultat une simplification du décodage Viterbi par ledit moyen de décodage.

**5.** Modem selon l'une des revendications 1 à 4 dans lequel ledit moyen de codage comprend un codeur convolutionnel 1/2, fournissant pour 1 bit sélectionné parmi les m bits du groupe associé au sous-canal k, 2 bits définissant un treillis à 4 subsets, les autres m-1 bits dudit groupe étant inchangés par ledit moyen de codage.

**6.** Modem selon l'une quelconque des revendications précédentes dans lequel la valeur de m varie de 2 à 9, dépendant du rapport signal/bruit pour le sous-canal associé.

**7.** Modem selon l'une quelconque des revendications précédentes dans lequel la bande passante de la ligne téléphonique est divisée en 512 sous-canaux.

**Claims**

**1.** A multifrequency modem using trellis-coded modulation, wherein the serial sequence of bits from or to the Data Terminal Equipment (DTE) is divided into groups of bits whose number m, for each group, is determined by the characteristics of a sub-channel k featuring a similar passband to a telephone line associated to said group said; modem being characterized in that it includes:
a data transmitter section comprising a coding means (12) which delivers m + 1 bits in reply to the m

EP 0 373 277 B1

bits from each of said groups of bits, a conversion means (14) delivering a complex symbol of X(k) value amongst a constellation of $2^{m+1}$ symbols in reply to said $m^{+1}$ bits associated to each sub-channel k, as well as a first transformation means (16) delivering a time sequence of digital samples obtained by effecting the reverse discrete Fourier transform of the sequence of complex symbols X(k) corresponding to all sub-channels, said digital samples being further converted into analog signals by means of a digital-analog convertor (20) before being transmitted through the telephone line; and
a receiver section comprising an analog-digital convertor (24) delivering a time sequence of digital samples based on the analog signals from the telephone line, a second transformation means (28) delivering a frequency domain sequence of complex symbols Y(k) associated to each sub-channel k, obtained by effecting the discrete Fourier transform of the digital samples sequence, as well a Viterbi decoding means (32) delivering a group of m bits in reply to each symbol Y(k).

2. The modem of Claim 1, in which said Viterbi decoding means uses the Viterbi algorithm for which the metric value used for a sub-channel k is weighted as a function of the number of bits m associated to said sub-channel, in such a manner as for the minimum total distance between two adjacent paths to present a value unrelated to the constellations associated to the symbols that make up said paths.

3. The modem of Claim 2, in which the metric value used for a sub-channel k associated to a number of bits m is multiplied by a factor equal to $2^{m-2}$ in such a manner as for the minimum total distance between two adjacent paths to be equal to the minimum distance value between two paths that only use constellations which correspond to the smallest value of $m (m = 2)$.

4. The modem of any of Claims 1 to 3, in which the various constellations associated to the various m values are selected according to a single geometrical model in such a manner as for the application of an m-related reduction factor to the constellations to enable the points of any thus reduced constellation to superimpose to the points of the constellation with 1,024 points whenever m is even, or to superimpose to the points of the constellation with 512 points whenever m is odd, which results in a simplified Viterbi decoding by said decoding means.

5. The modem of any of Claims 1 to 4, in which said coding means comprises a convolutional 1/2 encoder delivering 1 bit selected amongst the m bits of the group associated to the sub-channel k, 2 bits defining a 4-subset trellis and the other m-1 bits of said group being unchanged by said coding means.

6. The modem of any of the above claims, in which the m value varies from 2 to 9 depending on the associated sub-channel's signal-to-noise ratio.

7. The modem of any of the above claims, in which the telephone line passband is divided into 512 sub-channels.

**Patentansprüche**

1. Mehrfrequenzmodem unter Verwendung trellis-codierter Modulation, wobei die serielle Bitfolge, die von der DEE stammt oder zur DEE übertragen werden soll, in Bitgruppen unterteilt wird, deren Anzahl m für jede Gruppe durch die Eigenschaften eines Subkanals k des Frequenzbandes einer der Gruppe zugeordneten Telefonleitung bestimmt ist; wobei der Modem dadurch gekennzeichnet ist, daß er folgendes aufweist:
einen Übertragungsteil, der ein Codierungsmittel (12) aufweist, das m + 1 Bits als Antwort auf die m Bits jeder der Bitgruppen liefert, ein Umwandlungsmittel (14), das ein komplexes Wertesymbol X(k) aus Zuständen von $2^{m+1}$ Symbolen als Antwort auf die m + 1 Bits bereitstellt, die mit jedem Subkanal k verbunden sind, und ein erstes Transformationsmittel (16), das in der Zeit digitaler Stichproben eine Folge erzeugt, die erhalten wird, indem die inverse diskrete Fourier-Transformierte von der Folge der komplexen Symbole X(k) gebildet wird, die allen Subkanälen entspricht, wobei die digitalen Stichproben anschließend mittels eines Analog-Digital-Wandlers (20) in Analogsignale umgeformt werden, bevor sie auf der Telefonleitung übertragen werden; und
einen Empfangsteil, der einen Analog-Digital-Wandler (24) aufweist, der in der Zeit digitaler Stichproben, von Analogsignalen der Telefonleitung ausgehend, eine Folge erzeugt, ein zweites Transformationsmittel (28), das im Frequenzbereich komplexer Symbole Y(k), die mit jedem Subkanal k verbunden

14

sind, eine Folge erzeugt, die erhalten wird, indem die diskrete Fourier-Transformierte von der Folge der digitalen Stichproben gebildet wird, und ein Mittel zur Viterbi-Decodierung (32), das eine Gruppe von m Bit als Antwort auf jedes Symbol Y(k) bereitstellt.

2. Modem nach Anspruch 1, in dem das Mittel zur Viterbi-Decodierung den Viterbi-Algorithmus verwendet, für den die für einen Subkanal k verwendete Metrik in Abhängigkeit von der Anzahl der mit dem Kanal verbundenen Bit ausgeglichen wird, so daß der Wert des minimalen Gesamtabstands zwischen zwei benachbarten Wegen unabhängig von den Zuständen der Symbole ist, welche die Wege darstellen.

3. Modern nach Anspruch 2, in dem die Metrik, die für einen mit einer Anzahl von m Bits verbundenen Subkanal k verwendet wird, mit einem Koeffizienten $2^{m-2}$ multipliziert wird, so daß der minimale Gesamtabstand zwischen zwei benachbarten Wegen gleich dem Wert des Minimalabstandes zwischen zwei Wegen ist, bei denen nur Zustände verwendet werden, die dem kleinsten Wert von m (m = 2) entsprechen.

4. Modern nach einem der Ansprüche 1 bis 3, in dem die verschiedenen Zustände, die verschiedenen Werten von m zugeordnet sind, nach einem einzigen geometrischen Modell ausgewählt werden, so daß die Anwendung eines von m abhängigen Reduzierungsfaktors auf die Zustände den Werten jedes reduzierten Zustands ermöglicht, die Werte des Zustands mit 1024 Werten zu überlagern, wenn m gerade ist, oder die Werte des Zustands mit 512 Werten zu überlagern, wenn m ungerade ist, woraus eine Vereinfachung der Viterbi-Decodierung mittels des Decodierungsmittels resultiert.

5. Modern nach einem der Ansprüche 1 bis 4, in welchem das Codierungsmittel einen Faltungscodierer 1/2 aufweist, der für 1 Bit, das aus den m mit dem Subkanal k verbundenen Bits ausgewählt wird, 2 Bits erzeugt, die ein Trellis mit 4 Teilmengen definieren, wobei die anderen m-1 Bits der Gruppe durch das Codierungsmittel nicht verändert werden.

6. Modern nach einem der vorangegangenen Ansprüche, in welchem der Wert von m in Abhängigkeit vom Verhältnis Signal/Rauschen für den zugeordneten Subkanal von 2 bis 9 variiert.

7. Modern nach einem der vorangegangenen Ansprüche, in welchem das Frequenzband der Telefonleitung in 512 Subkanäle unterteilt ist.

FIG. 1

EP 0 373 277 B1

FIG. 2

m ──────────────────────────────────────────▶ CONSTELLATION

$b_m$ ──────────────────────────────────────────▶
⋮
$b_3$ ──────────────────────────────────────────▶ } SYMBOLE

$b_2$ ──────────────────────────────────────────▶

$b_1$ ─────────────▶ [ 40 ] ────────────────────▶ } SUBSET
                                ────────────────▶

FIG. 3

$b_1$ ──────▶ [ 42 ] ──●──▶ [ 44 $S_0$ ] ──▶ [ 46 $S_1$ ] ──────▶ [ 48 O-EX ] ─▶ $B_1$

─────▶ $B_0$

## FIG. 4

ETAT $S_1 S_0$ à n                    ETAT $S_1 S_0$ à n+1

0   $b_1 = 0$    $B_1 B_0 = 00$                    0

$b_1 = 1$         10

1      0      10                             1
       1
       0         00
2      1              01                     2
              11
       0   11
3                 01                         3
       1

## FIG. 15

$b_1$ → [ ] → • → [ $S_2$ ] → [ 0-EX ] → $B_0$

$b_2$ → [ ] → • → [ $S_0$ ] → • → [ $S_1$ ] → [ 0-EX ] → $B_1$

→ $B_2$

# FIG. 5

A0

$d0$

B0

B1

$d_1 = d_0 . \sqrt{2}$

C0

C2  C1

C3

$d_2 = 2d_0$

# FIG. 6

A0

$d'_0$

B0

B1

$d'_1 = d'_0 . \sqrt{2}$

C0

C2  C1

$d'_2 = 2 . d'_0$

FIG. 7

FIG.8

ETAT à n                        ETAT à n+1

FIG. 9

EP 0 373 277 B1

FIG. 10

$X_0$  $X_1$  $X_2$

Y'0

Y'1

Y'2

FIG. 11

$(k-2)T$  $(k-1)T$  $kT$  0  $(k+1)T$  0

$d_0$  $Y_0$

1

$Y_2$

2

$d_2$

FIG. 14

$(k-1)T$  $kT$  $(k+1)T$

$C_0$  $C_0$  $C_0$

$C_2$

$C_2$

$C_1$

$m_1$  $m_2$  $m_3$

FIG. 12

FIG. 13